# EUROPÄISCHE PATENTSCHRIFT

(11) **EP 0 867 142 B1**
(45) Veröffentlichungstag und Bekanntmachung des Hinweises auf die Patenterteilung: **09.05.2001**
(21) Anmeldenummer: 98810112.7
(22) Anmeldetag: 12.02.1998
(51) Int. Cl.: A47J 31/40, A47J 31/46

(54) **Espressomaschine**
Espresso coffee machine
Machine à café express

(30) Priorität: 18.02.1997 CH 36497
(43) Veröffentlichungstag der Anmeldung: 30.09.1998
(73) Patentinhaber: ELDOM ROTHRIST AG, CH-4852 Rothrist (CH)
(72) Erfinder: Weber, René, 4852 Rothrist (CH); Feierabend, Georges, 4663 Aarburg (CH)
(74) Vertreter: Hug Interlizenz AG

(56) Entgegenhaltungen:
- WO-A-94/23623
- WO-A-95/17121
- FR-A- 2 745 995
- US-A- 3 229 612
- US-A- 3 370 523
- US-A- 3 599 557
- US-A- 5 017 759

## Beschreibung

### TECHNISCHES GEBIET

Die vorliegende Erfindung betrifft eine Espressomaschine, welche mit Filterkapseln arbeitet.

### STAND DER TECHNIK

Eine derartige Espressomaschine ist z.B. bekannt aus der WO-A- 95/17121

### DARSTELLUNG DER ERFINDUNG

Eine Espressomaschine nach der Erfindung ist im Patentanspruch 1 angegeben.

Vorteilhafte sowie bevorzugte Ausgestaltungen sind in den abhängigen Ansprüchen angegeben bzw. ergeben sich aus dem nachstehend erläuterten Ausführungsbeispiel.

### KURZE ERLÄUTERUNG DER FIGUREN

Das Ausführungsbeispiel wird nachfolgend im Zusammenhang mit der Zeichnung näher erläutert. Es zeigen:
- Fig. 1: in teilweise nur schematischer Darstellung die wichtigsten Elemente der Brüh- und Auslaufeinheit einer Espressomaschine nach der Erfindung mit einer Auslaufwanne mit verstellbarem Auslaufrohr;
- Fig. 2: die Auslaufwanne mit dem Auslaufrohr in perspektivischer Darstellung im wesentlichen von vorn;
- Fig. 3: einen Schnitt (A-A in Fig. 4) durch die Auslaufwanne von Fig. 2; und
- Fig. 4: die Auslaufwanne in Ansicht von hinten

### WEGE ZUR AUSFÜHRUNG DER ERFINDUNG

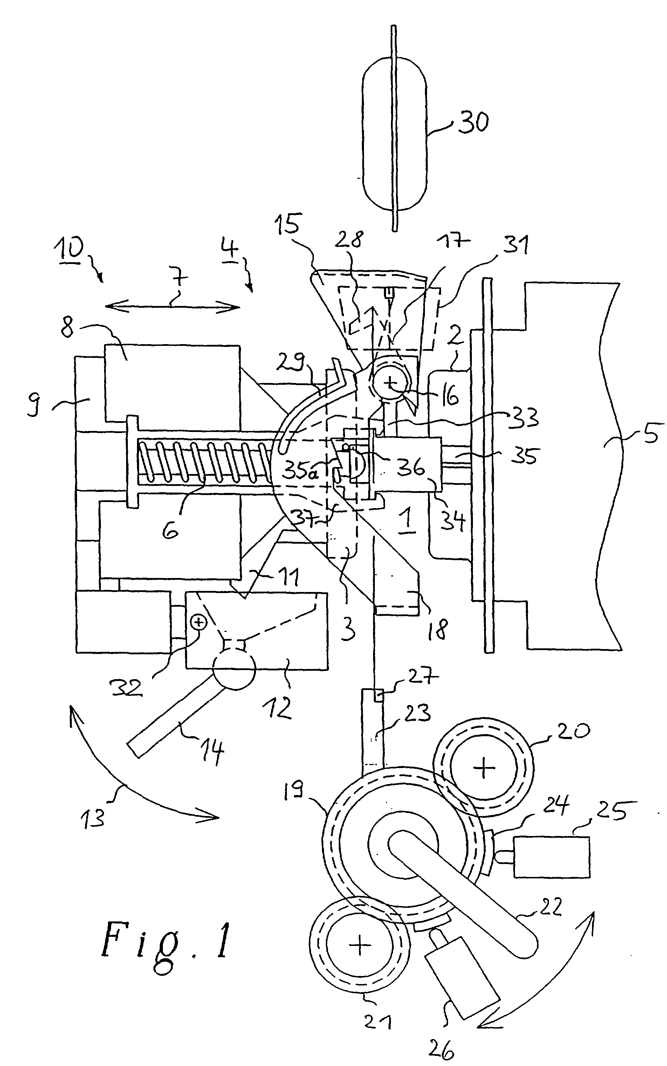

In Fig. 1 bezeichnet 1 einen Spalt zwischen einem ersten Brühkammerteil 2 und einem zweiten Brühkammerteil 3 einer Brüheinheit 4. Der Brühkammerteil 2 ist ortsfest und mit einem Heizelement 5 für die Erhitzung von Wasser verbunden. Der Brühkammerteil 3 ist Teil eines gegen der Wirkung von zwei Federn 6 (nur die vordere ist in Fig. 1 sichtbar) hydraulisch entsprechend dem Doppelpfeil 7 verstellbaren Zylinders 8, welcher zusammen mit einem feststehenden Kolben 9 eine Hydraulikbaugruppe 10 bildet. Mit 11 ist eine Auslauföffnung am Zylinder 8 bezeichnet, welche mit dem Brühkammerteil 3 in Verbindung steht und welche oberhalb einer ortsfest montierten Auslaufwanne 12 angeordnet ist. Im Boden der Auslaufwanne 12 ist ein Auslaufrohr 14 entsprechend dem Doppelpfeil 13 schwenkbar gelagert.

Mit 15 ist ein oberer Bügel bezeichnet, welcher den Spalt 1 nach oben verschliesst und um zwei Achsen 16 (nur die vordere ist in Fig. 1 sichtbar) aus dem Bereich des Spaltes 1 im Gegenuhrzeigersinn sowie gegen die Wirkung einer Feder 17 herausgeschwenkt werden kann. Ein zweiter, unterer Bügel 18 verschliesst den Spalt 1 nach unten und kann ebenfalls, allerdings im Uhrzeigersinn, um die gleichen Achsen 16 aus dem Bereich des Spaltes 1 herausgeschwenkt werden.

Nach unten herausversetzt gezeichnet ist eine Baugruppe mit drei Zahnrädern 19, 20 und 21, welche miteinander in Eingriff sind. Das mittlere Zahnrad 19 ist mit einem Betätigungshebel 22 sowie mit einem Betätigungsarm 23 versehen und weist zudem eine Nockenbahn 24 auf, die von zwei Tastschaltern 25 und 26 abgetastet wird.

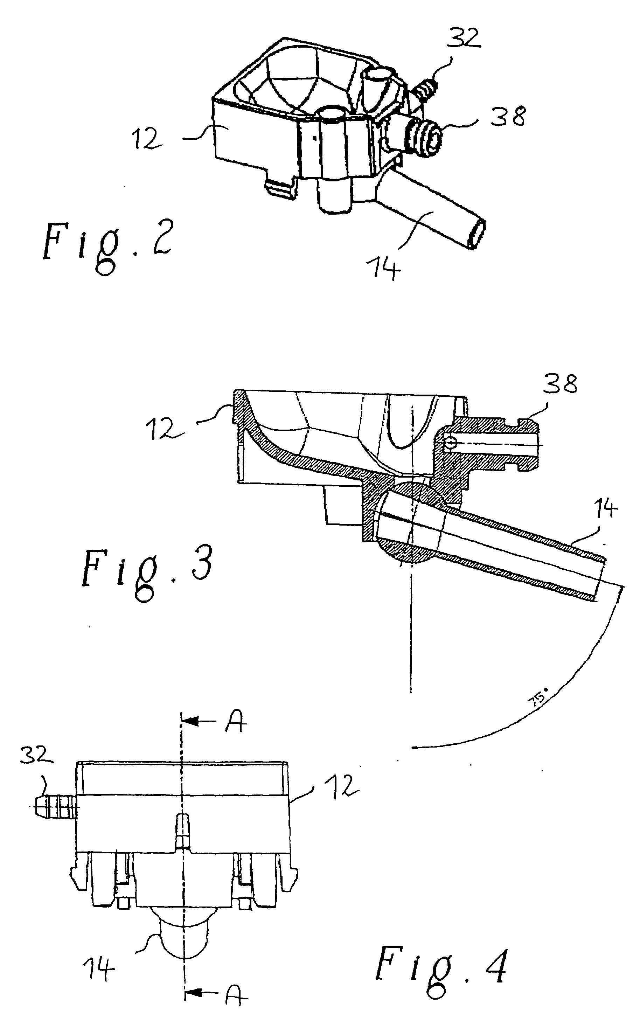

Zur Espressobereitung wird zunächst ein Gefäss, z.B. eine Tasse (nicht dargestellt), unter dem Auslaufrohr 14 plaziert, wobei durch die Verstellbarkeit des Auslaufrohres mit Vorteil auch grössere Tassen verwendbar sind und gleichzeitig bei kleineren Tassen ein Verspritzen des Espressos an der Tasse vorbei vermieden wird. Sodann kann der Betätigungshebel 22 im Gegenuhrzeigersinn verschwenkt werden. Hierbei bzw. hierdurch läuft folgende Aktionssequenz ab:
- Ueber den Betätigungsarm 23 am Zahnrad 19 und einen an diesem angeformten Nocken 27, der an einen am oberen Bügel 15 angeformten Nocken 28 anschlägt, wird der obere Bügel 15 aus dem Bereich des Spaltes 1 im Gegenuhrzeigersinn herausgeschwenkt. Hierbei kommt der Nocken 28 am oberen Bügel mit einer Federzunge 29 am unteren Bügel in Berührung, was zur Folge hat, dass der untere Bügel 18 aus einer im Uhrzeigersinn gegenüber seiner dargestellten verdrehten Schwenkstellung in seine dargestellte Schwenkstellung im Gegenuhrzeigersinn verschwenkt wird. Sobald der untere Bügel 18 die dargestellte Schwenkstellung erreicht hat, schnappt der Nocken 28 am oberen Bügel über den Federarm 29, so dass der obere Bügel ohne Mitnahme des unteren Bügels noch ein Stück weiter verschwenkt werden kann. In dem schliesslich erreichten Zustand ist der Spalt 1 oben offen, nach unten durch den unteren Bügel 18 dagegen geschlossen. Eine mit gemahlenem Espresso gefüllte Filterkapsel 30 kann nunmehr in den Spalt 1 von oben eingeworfen werden, wobei sie durch einen Einwurftrichter 31 geführt wird. Wegen dem unteren Bügel 18 bleibt sie genau zwischen und auf Höhe der beiden Brühkammerteile 2 und 3 liegen.
- Über den Taster 25 wird (mit einer ersten Zeitverzögerung)eine Hydraulikpumpe (nicht dargestellt) elektrisch eingeschaltet, welche den für das Verfahren des Zylinders 8 notwendigen Hydraulikdruck erzeugt.
- Mit dem Zahnrad 21 wird ein Ventil (nicht dargestellt) in einer Hydraulikleitung (ebenfalls nicht dargestellt) betätigt, welche auf die Tülle 32 an der Auslaufwanne 12 aufgesteckt ist. Von dort wird der Hydraulikdruck über einen Nippel 38 (Fig. 2) in die erwähnte Hydraulikbaugruppe eingeleitet und veranlasst dort des Verfahren des Zylinders 8 nach rechts, wobei der Spalt 1 geschlossen und die Filterkapsel 30 zwischen den beiden Brühkammerteilen 2 und 3 dicht eingeschlossen wird.
- Nach Durchfahren einer ersten Teilstrecke seines Fahrweges schlägt der Zylinder 8 gegen den oberen Bügel an, der von dem Betätigungsarm 23 immer noch in seiner offen Stellung gehalten wird. Die beiden Nocken 27 am Betätigungsarm 23 bzw.28 am oberen Bügel 15 sind jedoch so ausgebildet, dass sie unter der Wirkung des gegen den oberen Bügel 15 drückenden Zylinders 8 voneinander abgleiten können. Der obere Bügel 15 kann daher unter der Wirkung der Feder 17 wieder in den Spalt 1 zurückschwenken und diesen nach oben verschliessen. Dies ist wichtig, um z.B den Einwurf weiterer Filterkapseln 30 zu verhindern, was zu Störungen führen könnte.
- Beim Durchfahren der restlichen Teilstrecke seines Fahrweges stösst der Zylinder 8 schliesslich auch noch gegen ein Gestänge 33, von dem der Einwurftrichter 31 gehalten wird und mittels welchem die Bügel-Achsen 16 mit zwei Muffen 34 verbunden sind, welche auf Führungsstangen 35 verschiebbar geführt ist. Dies hat zur Folge, dass die gesamte Einheit aus Muffen 34, Gestänge 33, Einwurftrichter 31 sowie dem oberen 16 und dem unteren Bügel 18 von dem Zylinder 8 nach rechts mitgenommen wird. Hierbei kommt dann auch noch eine Schräge 35a am unteren Bügel 18 in Anschlag an einen Feststehenden Anschlagpunkt 36, wodurch der untere Bügel 18 aus seiner gezeigten Schwenkstellung im Uhrzeigersinn aus dem Spalt 1 herausgeschwenkt wird. Der Spalt 1 ist danach nach unten offen.
- Über den Taster 26 wird (mit einer zweiten Zeitverzögerung) das Heizelement 5 sowie eine weitere Druckpumpe elektrisch eingeschaltet, welche das für die Espressozubereitung benötigte Wasser duch das Heizelement 5 in bzw. durch die Brüheinheit 4 pumpt.
- Ein Ventil (nicht dargestellt) in der Brühwasserzuleitung (nicht dargestellt) zum Heizelement wird mittels des Zahnrades 20 geöffnet.
- Der beim Durchströmen der Filterkapsel in der Brüheinheit 4 entstandene Espresso verlässt den Zylinder 8 über die Auslauföffnung 11, wird in der Auslaufwanne 12 aufgefangen und fliesst schliessich über das in deren Boden eingelassene schwenkbare Auslaufrohr 14 in die bereitgestellte Tasse.
- Ist die gewünschte Espressomenge bereitet, wird der Betätigungshebel 22 in seine Ausgangs- bzw. Nullstellung zurückgeschwenkt wobei über die Taster 25 und 26 die elektrischen Komponenten ausgeschaltet und über die Zahnräder 20 und 21 die erwähnten Ventile wieder geschlossen werden.
- Nach dem Schliessen des Ventils in der Hydraulikleitung und dem daduch bedingten Druckabfall in der Hydraulikbaugruppe 10 fährt der Zylinder 8 unter der Wirkung der Federn 6 wieder in seine dargestellte Ausgangsposition zurück, wobei sich der Spalt 1 öffnet und die verbrauchte Filterkapsel aus diesem nach unten herausfällt. Sie kann dies, da sie durch den zwischzeitlich aus dem Spalt 1 herausgeschwenkten unteren Bügel 18 nicht länger daran gehindert wird. Mit Vorteil ist unter dem Spalt 1 im Gehäuse der Espressomaschine noch ein einfach herausnehmbarer Auffangbehälter für die verbrauchten Filterkapseln vorgesehen. Beim Zurückfahren nimmt der Zylinder mittels Haken 37 schliesslich auch noch die Muffen 34 und damit die gesamte Einheit aus Muffen 34, Gestänge 33, Einwurftrichter 31 sowie dem oberen 15 und dem unteren Bügel 18 in ihre Ausgansposition mit. Während des Zurückfahrens aus der Auslauföffnung 11 des Zylinders 8 eventuell noch austretender Espresso wird über die Auslaufwanne 12 aufgefangen und ebenfall noch in die Tasse geleitet.

Fig. 2 zeigt die Auslaufwanne 12 mit dem Auslaufrohr 14 in perspektivischer Darstellung im wesentlichen von vorn. Erkennbar sind hier auch die Tülle 32 sowie der Nippel 38.

Im Schnitt von Fig. 3 ist zu erkennen, dass die Schwenklagerung des Auslaufrohrs 14 im Boden der Auslaufwanne 12 als Kugelgelenk ausgebildet ist.

Fig. 4 zeigt schliesslich noch die Auslaufwanne 12 von hinten.

## Patentansprüche

1. Espressomaschine, welche mit Filterkapseln arbeitet und bei welcher eine Brüheinheit (4) mit zwei relativ zueinander zwischen einer Öffnungsstellung und einer Schliessstellung verfahrbaren Brühkammerteilen (2,3) vorgesehen ist, wobei die Brühkammerteile (2,3) zwischen sich und in ihrer Öffnungsstellung einen Spalt (1) einschliessen, wobei ein oberer Bügel (15) vorgesehen ist, welcher zwischen einer ersten, den Spalt (1) nach oben verschliessenden Stellung und einer zweiten, den Spalt von oben freigebenden Stellung verschwenkbar ist, und wobei ein unterer Bügel (18) vorgesehen ist, welcher zwischen einer ersten, den Spalt (1) nach unten verschliessenden Stellung und einer zweiten, den Spalt (1) nach unten freigebenden Stellung verschwenkbar ist, dadurch gekennzeichnet, dass ein Betätigungshebel (22) vorgesehen ist, durch Verschwenkung von welchem die Espressozubereitung gestartet und beendet wird, dass der Betätigungshebel (22) bei seiner Verschwenkung zum Starten der Espressozubereitung zumindest mittelbar auf die beiden Bügel (15,18) einwirkt und den oberen Bügel aus seiner ersten in seine zweite und den unteren Bügel aus seiner zweiten in seine erste Schwenkstellung verschwenkt.

2. Espressomaschine nach Anspruch 1, dadurch gekennzeichnet, dass der obere Bügel (15) durch eine Feder (17) in Richtung seiner ersten Schwenkstellung beaufschlagt ist.

3. Espressomaschine nach Anspruch 1 oder 2, dadurch gekennzeichnet, dass der Betätigungshebel (22) auf den oberen Bügel (15) unter anderem über eine erste Nockenverbindung (27,28) einwirkt, welche unter einer vorgegebenen, die Kraft der Feder (17) vorzugsweise übersteigenden Rückstellkraft lösbar ist.

4. Espressomaschine nach Anspruch 3, dadurch gekennzeichnet, dass die Lösung der ersten Nockenverbindung(27,28) beim Verfahren der beiden Brühkammerteile (2,3) von ihrer Öffnungs- in ihre Schliesstellung unter Einwirkung eines beweglichen Brühkammerteils (3) der beiden Brühkammerteile auf den oberen Bügel (15) erfolgt.

5. Espressomaschine nach einem der Ansprüche 1 - 4, dadurch gekennzeichnet, dass der Betätigunghebel (22) auf den unteren Bügel (18) unter anderem über eine zweite Nockenverbindung (28,29) einwirkt.

6. Espressomaschine nach einem der Ansprüche 1 - 5, dadurch gekennzeichnet, dass der Betätigungshebel (22) auf den unteren Bügel (18) indirekt über den oberen Bügel (15) einwirkt.

7. Espressomaschine nach Anspruch 6, dadurch gekennzeichnet, dass der untere Bügel (18) beim Verschwenken des Betätigungshebels (22) zum Starten der Espressozubereitung seine erste Schwenkstellung erreicht, bevor der obere Bügel (15) seine zweite Schwenkstellung erreicht und dass die zweite Nockenverbindung (28,29) so ausgebildet ist, dass sie sich bei Erreichen der ersten Schwenkstellung durch den unteren Bügel (15) selbsttätig löst.

8. Espressomaschine nach Anspruch 7, dadurch gekenzeichnet, dass die zweite Nockenverbindung eine Federzunge (29) am unteren Bügel (18) umfasst.

9. Espressomaschine nach einem der Ansprüche 1 - 8, dadurch gekennzeichnet, dass der obere (15) und der untere Bügel (18) Teil einer Einheit (33,34, 31,41) sind, welche beim Verfahren der beiden Brühkammerteile (2,3) relativ zueinander mitbewegt wird, allerdings nur über einen Weg, welcher kürzer als die Distanz zwischen der Öffnungs- und der Schliessstellung der beiden Brühkammerteile (2,3) ist.

10. Espressomaschine nach einem der Ansprüche 1 - 9, dadurch gekennzeichnet, dass der Betätigungshebel (22) mit einem ersten Drehventil in einer Hydraulikleitung zu einer Hydraulikbaugruppe (8,9) zum Verfahren eines der beiden Brühkammerteile (3) gekoppelt ist.

11. Espressomaschine nach einem der Ansprüche 1 - 10, dadurch gekennzeichnet, dass der Betätigungshebel (22) mit einem zweiten Drehventil in einer Brühwasserzuleitung zu einem Heizelement (5) gekoppelt ist.

12. Espressomaschine nach einem der Ansprüche 1 - 11, dadurch gekennzeichnet, dass der Betätigungshebel (22) mit einem ersten Tastschalter (25) gekoppelt ist, durch welchen eine Hydraulikpumpe, vorzugsweise mit einer ersten Zeitverzögerung, elektrisch einschaltbar ist.

13. Espressomaschine nach einem der Ansprüche 1 - 12, dadurch gekennzeichnet, dass der Betätigungshebel (22) mit einem zweiten Tastschalter (26) gekoppelt ist, durch welchen ein Heizelement (5) sowie eine Druckpumpe für Brühwasser, vorzugsweise mit einer zweiten Zeitverzögerung, einschaltbar ist.

14. Espressomaschine nach einem der Ansprüche 1 - 13, gekennzeichnet durch ein im Winkel verstellbares Auslaufrohr (14).

15. Espressomaschine nach Anspruch 14, dadurch gekennzeichnet, dass das Auslaufrohr (14) im Boden einer Auslaufwanne (12) schwenkbar gelagert ist.

16. Espressomaschine nach Anspruch 15, dadurch gekennzeichnet, dass die Auslaufwanne (12) unter einer Auslauföffnung (11) eines beweglichen (3) der beiden Brühkammerteile (8) derart angeordnet ist, dass sich die genante Auslauföffnung (11) in jeder möglichen Position des beweglichen Teils (8) über der Auslaufwanne (12) befindet.

## Claims

1. An espresso machine which works with filter capsules and wherein a scalding unit (4) with two movable scalding chamber parts (2, 3) which can be moved relative to one another between an opening position and a closing position is provided wherein the scalding chamber parts (2, 3) between themselves and in their opening position enclose a gap (1), wherein an upper lever (15) is provided which can be swiveled between a first position which closes the gap (1) towards the top and a second position which unbars the gap from the top and wherein a lower lever (18) is provided which can be swiveled between a first position closing the gap (1) towards the bottom and a second position, unbarring the gap (1) towards the bottom, characterized in that an actuation lever (22) is provided which when swiveled starts and ends the espresso preparation, that the actuation lever (22), when swiveled to start the preparation of espresso, acts at least indirectly on the two levers (15, 18) swiveling the upper lever from its first into its second and the lower lever from its second into its first swiveling position.

2. An espresso machine according to claim 1, characterized in that the upper lever (15) is subjected to the action of a spring (17) in the direction of its first swivel position.

3. An espresso machine according to claims 1 or 2, characterized in that the actuation lever (22) acts on the upper lever (15) inter alia by way of a first cam connection (27, 28) which can be disconnected under a predetermined resetting force preferably exceeding the force of the spring (17).

4. An espresso machine according to claim 3, characterized in that the disconnection of the first cam connection (27, 28) takes place during moving of the two scalding chamber parts (2, 3) from their opening position into their closing position under the action of a movable scalding chamber part (3) of the two scalding chamber parts on the upper lever (15).

5. An espresso machine according to one of the claims 1 - 4, characterized in that the actuation lever (22) acts on the lower lever (18) inter alia by way of a second cam connection (28, 29).

6. An espresso machine according to one of the claims 1 - 5, characterized in that the actuation lever (22) indirectly acts on the lower lever (18) by way of the upper lever (15).

7. An espresso machine according to claim 6, characterized in that the lower lever (18) during the swiveling of the actuation lever (22) for starting the espresso preparation reaches its first swivel position before the upper lever (15) has reached its second swivel position and that the second cam connection (28,29) is so designed that it disconnects itself spontaneously when the lower lever (15) has reached the first swivel position.

8. An espresso machine according to claim 7, characterized in that the second cam connection includes a spring lug (29) on the lower lever (18).

9. An espresso machine according to one of the claims 1 - 8, characterized in that the upper lever (15) and the lower lever (18) are part of a unit (33,34, 31,41) which during the moving of the two scalding chamber parts (2, 3) are moved along relative to each other, however only over a distance which is shorter that the distance between the opening and the closing positions of the two scalding chamber parts (2, 3).

10. An espresso machine according to one of the claims 1 - 9, characterized in that the actuation lever (22) is coupled with a first rotary valve in a hydraulic line to a hydraulic assembly (8, 9) for moving one of the two scalding chamber parts (3).

11. An espresso machine according to one of the claims 1 - 10, characterized in that the actuation lever (22) is coupled with a second rotary valve in a scalding water supply line to a heater element (5).

12. An espresso machine according to one of the claims 1 - 11, characterized in that the actuation lever (22) is coupled with a first tracer switch (25) by means of which a hydraulic pump, preferably with a first time delay, can be switched on electrically.

13. An espresso machine according to one of the claims 1 - 12, characterized in that the actuation lever (22) is coupled with a second tracer switch (26) by means of which a heater element (5) and a pressure pump for scalding water, preferably with a second time delay, can be switched on.

14. The espresso machine according to one of the claims 1 to 13, characterized by a drain pipe (14) whose angle is adjustable.

15. The espresso machine according to claim 14, characterized in that the drain pipe (14) is swivel-mounted in the base of a drain tub (12).

16. The espresso machine according to claim 15, characterized in that the drain tub (12) is arranged under a drain opening (11) of a movable one (3) of the two scalding chamber parts (8) such that the mentioned drain opening (11) is situated above the drain tub (12) in any possible position of the movable part (8).

## Revendications

1. Machine à espresso travaillant avec des capsules filtrantes et dans laquelle on a prévu une unité d'ébouillantage (4) avec deux compartiments d'ébouillantage (2, 3) déplaçables relativement l'un à l'autre entre une position d'ouverture et une position de fermeture, les compartiments d'ébouillantage (2, 3) définissant entre eux et dans leur position d'ouverture une fente (1), étant précisé qu'un étrier supérieur (15) est prévu, lequel peut pivoter entre une première position obturant la fente (1) vers le dessus et une seconde position libérant la fente du dessus, et sachant qu'un étrier inférieur (18) est prévu, lequel peut pivoter entre une première position obturant la fente (1) vers le dessous et une seconde position libérant la fente (1) vers le dessous, caractérisée en ce qu'on a prévu un levier d'actionnement (22) par pivotement duquel la préparation d'espresso est lancée et terminée, en ce que le levier d'actionnement (22) intervient au moins indirectement sur les deux étriers (15, 18) lors de son pivotement, pour faire démarrer la préparation d'espresso, et fait pivoter l'étrier supérieur de sa première position de pivotement dans sa seconde, et l'étrier inférieur de sa seconde position de pivotement dans la première.

2. Machine à espresso selon la revendication 1, caractérisée en ce que l'étrier supérieur (15) est sollicité par un ressort (17) dans la direction de sa première position de pivotement.

3. Machine à espresso selon la revendication 1 ou 2, caractérisée en ce que le levier d'actionnement (22) intervient sur l'étrier supérieur (15) entre autres par une première liaison à came (27, 28), qui peut être desserrée sous une force de rappel prédéfinie surmontant de préférence la force du ressort (17).

4. Machine à espresso selon la revendication 3, caractérisée en ce que le desserrage de la première liaison à came (27, 28) se fait lors du déplacement des deux compartiments d'ébouillantage (2, 3) de leur position d'ouverture dans leur position de fermeture sous l'influence d'une partie mobile (3) des deux compartiments d'ébouillantage sur l'étrier supérieur (15).

5. Machine à espresso selon l'une des revendications 1 - 4, caractérisée en ce que le levier d'actionnement (22) intervient sur l'étrier inférieur (18) entre autres via une seconde liaison à came (28, 29).

6. Machine à espresso selon l'une des revendications 1 - 5, caractérisée en ce que le levier d'actionnement (22) intervient indirectement sur l'étrier inférieur (18) via l'étrier supérieur (15).

7. Machine à espresso selon la revendication 6, caractérisée en ce que l'étrier inférieur (18) atteint sa première position de pivotement lors du pivotement du levier d'actionnement (22), pour faire démarrer la machine à espresso, avant que l'étrier supérieur (15) atteigne sa seconde position de pivotement et en ce que la seconde liaison à came (28, 29) est réalisée de façon telle qu'elle se détache spontanément à l'atteinte de la première position de pivotement par l'étrier inférieur (15).

8. Machine à espresso selon la revendication 7, caractérisée en ce que la seconde liaison à came comprend une languette ressort (29) sur l'étrier inférieur (18).

9. Machine à espresso selon l'une des revendications 1 - 8, caractérisée en ce que les étriers supérieur (15) et inférieur (18) font partie d'une unité (33, 34, 31, 41) qui est entraînée lors du déplacement des deux compartiments d'ébouillantage (2, 3) l'un par rapport à l'autre, mais seulement d'une distance qui est plus courte que la distance séparant la position d'ouverture et la position de fermeture des deux compartiments d'ébouillantage (2, 3).

10. Machine à espresso selon l'une des revendications 1 - 9, caractérisée en ce que le levier d'actionnement (22) est couplé à une première soupape rotative interposée dans une conduite hydraulique desservant un groupe constructif hydraulique (8, 9) pour déplacer l'un des deux compartiments d'ébouillantage (3).

11. Machine à espresso selon l'une des revendications 1 - 10, caractérisée en ce que le levier d'actionnement (22) est couplé à une seconde soupape rotative interposée dans une conduite d'apport d'eau bouillante desservant un élément chauffant (5).

12. Machine à espresso selon l'une des revendications 1 - 11, caractérisée en ce que le levier d'actionnement (22) est couplé à un premier interrupteur à poussoir (25) par lequel peut être enclenchée électriquement une pompe hydraulique, de préférence avec une première temporisation.

13. Machine à espresso selon l'une des revendications 1 - 12, caractérisée en ce que le levier d'actionnement (22) est couplé à un second interrupteur à poussoir (26) par lequel un élément chauffant (5) ainsi qu'une pompe foulante pour de l'eau bouillante peuvent être enclenchés, de préférence avec une seconde temporisation.

14. Machine à espresso selon l'une des revendications 1 - 13, caractérisée par un tuyau d'écoulement (14) déplaçable angulairement.

15. Machine à espresso selon la revendication 14, caractérisée en ce que le tuyau d'écoulement (14) est monté pivotant au fond d'un pot d'écoulement (12).

16. Machine à espresso selon la revendication 15, caractérisée en ce que le pot d'écoulement (12) est placé sous un orifice d'écoulement (11) d'une partie mobile (3) des deux compartiments d'ébouillantage (8), de façon à ce que l'orifice d'écoulement susdit (11) se trouve au dessus du pot d'écoulement (12) dans toute position possible de la partie mobile (8).
